# EUROPÄISCHE PATENTANMELDUNG

(11) **EP 3 584 414 A1**
(43) Veröffentlichungstag der Anmeldung: **25.12.2019**
(21) Anmeldenummer: 18178554.4
(22) Anmeldetag: 19.06.2018
(51) Int. Cl.: F01K 3/12

(54) **VORRICHTUNG UND VERFAHREN ZUR BEREITSTELLUNG VON WÄRME, KÄLTE UND/ODER ELEKTRISCHER ENERGIE**

(71) Anmelder: Siemens Aktiengesellschaft, 80333 München (DE)
(72) Erfinder: Danov, Vladimir, 91056 Erlangen (DE)

(57) **Zusammenfassung**

Es wird eine Vorrichtung (1) zur Bereitstellung von Wärme, Kälte und/oder elektrischer Energie mittels eines Arbeitsfluids vorgeschlagen, umfassend:
- einen ersten und zweiten Verdichter (11, 12) zum Verdichten des Arbeitsfluids;
- einen ersten und zweiten Expander (21, 22) zum Expandieren des Arbeitsfluids; und
- einen ersten und zweiten Wärmespeicher (41, 42);
dadurch gekennzeichnet, dass
- ein Ausgang des ersten Verdichters (11) mit einem ersten Eingang (411) des ersten Wärmespeichers (41) und einem zweiten Eingang (422) des zweiten Wärmespeichers (42) thermisch gekoppelt ist;
- ein Ausgang des zweiten Verdichters (12) mit einem ersten Eingang (421) des zweiten Wärmespeichers (42) und einem zweiten Eingang (412) des ersten Wärmespeichers (41) thermisch gekoppelt ist;
- ein Eingang des ersten Expanders (21) mit einem ersten Ausgang (413) des ersten Wärmespeichers (41) und einem zweiten Ausgang (424) des zweiten Wärmespeichers (41) thermisch gekoppelt ist; und
- ein Eingang des zweiten Expanders (22) mit einem ersten Ausgang (423) des zweiten Wärmespeichers (42) und einem zweiten Ausgang (414) des ersten Wärmespeichers(41) thermisch gekoppelt ist.

Weiterhin betrifft die Erfindung jeweils ein Verfahren zum Betrieb einer solchen Vorrichtung (1) zur Bereitstellung wenigstens einer Kälte und wenigstens einer Wärme.

## Beschreibung

Die Erfindung betrifft eine Vorrichtung zur Bereitstellung von Wärme, Kälte und/oder elektrischer Energie. Weiterhin betrifft die Erfindung ein Verfahren zum Betrieb einer solchen Vorrichtung.

Zur Reduktion von Kohlenstoffdioxidemissionen ist es entscheidend flexible und effiziente Umwandlungseinheiten einzusetzen, die verschiedene Energieformen erzeugen und/oder ineinander umwandeln (englisch: Power to Cold, Power to Heat, Heat to Power, etc.)

Aus dem Stand der Technik sind eine Vielzahl von Vorrichtungen (Umwandlungseinheiten) bekannt, die elektrische Energie (Strom), Wärme und/oder Kälte für einen Verbraucher, beispielsweise ein Gebäude, bereitstellen. Für die Bereitstellung der genannten Energieformen werden nach dem Stand der Technik mehrere Vorrichtungen parallel betrieben beziehungsweise parallel geschaltet. Beispielsweise weisen Einkaufszentren einen Bedarf an elektrischer Energie, Wärme und Kälte zeitgleich auf. Damit diese Energieformen gleichzeitig bereitgestellt werden, kann elektrischer Strom aus einem Stromnetz bezogen, Wärme mittels eines Gasboilers erzeugt und Kälte mittels einer Kältemaschine bereitgestellt werden.

Weiterhin sind vorteilhafte Kombination bekannt, beispielsweise Blockheizkraftwerke (abgekürzt: BHKW). Hierbei erzeugt ein Gasmotor gleichzeitig elektrische Energie und Wärme. Ferner könnte eine Fernwärme zum Betreiben einer Absorptionskälteanlage zur Bereitstellung von Kälte verwendet werden.

Der vorliegenden Erfindung liegt die Aufgabe zugrunde, eine Vorrichtung und ein Verfahren bereitzustellen mittels welcher eine Bereitstellung von Wärme und Kälte, insbesondere gleichzeitig, und/oder elektrischer Energie effizient ermöglicht wird.

Die Aufgabe wird durch eine Vorrichtung mit den Merkmalen des unabhängigen Patentanspruches 1, durch ein Verfahren mit den Merkmalen des unabhängigen Patentanspruches 12, sowie durch ein Verfahren mit den Merkmalen des unabhängigen Patentanspruches 14 gelöst. In den abhängigen Patentansprüchen sind vorteilhafte Ausgestaltungen und Weiterbildungen der Erfindung angegeben.

Die erfindungsgemäße Vorrichtung zur Bereitstellung von Wärme, Kälte und/oder elektrischer Energie, umfasst wenigstens:
- einen ersten und zweiten Verdichter zum verdichten eines Arbeitsfluids;
- einen ersten und zweiten Expander zum Expandieren des Arbeitsfluids; und
- einen ersten und zweiten Wärmespeicher.
Erfindungsgemäß ist
- ein Ausgang des ersten Verdichters mit einem ersten Eingang des ersten Wärmespeichers und einem zweiten Eingang des zweiten Wärmespeichers thermisch gekoppelt;
- ein Ausgang des zweiten Verdichters mit einem ersten Eingang des zweiten Wärmespeichers und einem zweiten Eingang des ersten Wärmespeichers thermisch gekoppelt;
- ein Eingang des ersten Expanders mit einem ersten Ausgang des ersten Wärmespeichers und einem zweiten Ausgang des zweiten Wärmespeichers thermisch gekoppelt; und
- ein Eingang des zweiten Expanders mit einem ersten Ausgang des zweiten Wärmespeichers und einem zweiten Ausgang des ersten Wärmespeichers thermisch gekoppelt.

Insbesondere werden die genannten thermischen Kopplungen wenigstens teilweise, insbesondere vollständig, durch eine in Bezug auf das Arbeitsfluid fluidische Kopplung ausgebildet. Mittels der vorliegenden Erfindung kann vorteilhafterweise Wärme, Kälte und/oder elektrische Energie (Strom oder elektrischer Strom) gleichzeitig oder zeitlich voneinander getrennt bereitgestellt oder erzeugt werden. Somit kann die erfindungsgemäße Vorrichtung flexibel an einem Strommarkt betrieben werden. Mit anderen Worten bildet die erfindungsgemäße Vorrichtung ein synergetisches Konzept für eine Kraft-Wärme-Kälte-Kopplung aus. Hierbei kombiniert die vorliegende Erfindung synergetisch das Prinzip eines Joule-Kreisprozesses (oder Brayton-Kreisprozesses) mit einer Mehrzahl von Wärmespeichern.

Hierbei ermöglicht die erfindungsgemäße Vorrichtung beispielsweise die Bereitstellung von Wärme, Kälte und elektrischer Energie, oder beispielsweise die Bereitstellung von nur Wärme, oder beispielsweise die Bereitstellung von nur Kälte. Werden beispielsweise Wärme und Kälte gleichzeitig erzeugt beziehungsweise bereitgestellt, so weist die erfindungsgemäße Vorrichtung typischerweise einen Wirkungsgrad oberhalb von 85 Prozent auf, wobei der Wirkungsgrad durch das Verhältnis der erzeugten Wärme und Kälte in Bezug auf die eingesetzte elektrische Energie definiert ist.

Das erfindungsgemäße Verfahren zum Betrieb einer Vorrichtung gemäß der vorliegenden Erfindung und/oder einer ihrer Ausgestaltungen zur Bereitstellung wenigstens einer Kälte, umfasst wenigstens die folgenden Schritte:
- Verdichten des Arbeitsfluids mittels des ersten Verdichters;
- Wenigstens teilweises Einleiten des verdichteten Arbeitsfluids in den ersten Wärmespeicher mittels des ersten Eingangs des ersten Wärmespeichers;
- Wenigstens teilweises Einleiten des verdichteten und durch eine Wärmeübertragung von dem Arbeitsfluid auf den ersten Wärmespeicher abgekühlten Arbeitsfluids in den Eingang des ersten Expanders mittels des ersten Ausgangs des ersten Wärmespeichers; und
- Expandieren des in den ersten Expander eingeleiteten Arbeitsfluids mittels des ersten Expanders.

Besonders bevorzugt umfasst das Verfahren wenigstens den weiteren Schritt:
- Wenigstens teilweises Einleiten des mittels des ersten Verdichters verdichteten Arbeitsfluids in den zweiten Wärmespeicher mittels des zweiten Eingangs des zweiten Wärmespeichers.

Hierbei kann das Arbeitsfluid bevorzugt vollständig in den zweiten Wärmespeicher eingeleitet werden, wobei dann das Arbeitsfluid nicht in den ersten Wärmespeicher eingeleitet wird.

Mit anderen Worten wird zunächst für das Verdichten des Arbeitsfluids mittels des ersten Verdichters elektrische Energie verwendet. Aufgrund der Verdichtung des Arbeitsfluids wird dieses erwärmt. Durch das wenigstens teilweise Einleiten des verdichteten Arbeitsfluids in den ersten Wärmespeicher gibt dieses wenigstens teilweise seine Wärme an den ersten Wärmespeicher ab. Mit anderen Worten wird die mittels der Verdichtung erzeugte Wärme mittels des ersten Wärmespeichers wenigstens teilweise gespeichert oder zwischengespeichert. Das am ersten Ausgang des ersten Wärmespeichers wenigstens teilweise abgekühlte Arbeitsfluid wird anschließend wenigstens teilweise zum Eingang des ersten Expanders geführt, wobei mittels des ersten Expanders dieses expandiert und somit weiter abgekühlt wird. Durch die Abkühlung des Arbeitsfluids kann, beispielsweise über einen ersten Wärmetauscher, Kälte bereitgestellt werden. Hierbei geht die zur Bereitstellung der Kälte erzeugte Wärme nicht verloren, sondern wird mittels des ersten Wärmespeichers für eine weitere Verwendung gespeichert. Zudem wird mittels des ersten Expanders elektrische Energie erzeugt und bereitgestellt. Weiterhin kann es zur Erzeugung einer ausreichenden Kälte ergänzend erforderlich sein einen Teil der Wärme, insbesondere einen Großteil, abzuführen und nicht mittels des ersten Wärmespeichers zu speichern.

Das erfindungsgemäße Verfahren zum Betrieb einer Vorrichtung gemäß der vorliegenden Erfindung und/oder einer ihrer Ausgestaltungen zur Bereitstellung wenigstens einer Wärme, umfasst wenigstens die folgenden Schritte:
- Verdichten des Arbeitsfluids mittels des zweiten Verdichters;
- Wenigstens teilweises Einleiten des verdichteten Arbeitsfluids in den zweiten Wärmespeicher mittels des ersten Eingangs des zweiten Wärmespeichers;
- Wenigstens teilweises Einleiten des verdichteten und durch eine Wärmeübertragung von dem zweiten Wärmespeicher auf das Arbeitsfluid erwärmten Arbeitsfluids in den Eingang des zweiten Expanders mittels des ersten Ausgangs des zweiten Wärmespeichers; und
- Expandieren des in den zweiten Expander eingeleiteten Arbeitsfluids mittels des zweiten Expanders.

Besonders bevorzugt umfasst das Verfahren wenigstens den weiteren Schritt:
- Wenigstens teilweises Einleiten des mittels des zweiten Verdichters verdichteten Arbeitsfluids in den ersten Wärmespeicher mittels des zweiten Eingangs des ersten Wärmespeichers.

Hierbei kann das Arbeitsfluid bevorzugt vollständig in den ersten Wärmespeicher eingeleitet werden, wobei dann das Arbeitsfluid nicht in den zweiten Wärmespeicher eingeleitet wird.

Mit anderen Worten wird zunächst für das Verdichten des Arbeitsfluids mittels des zweiten Verdichters elektrische Energie verwendet. Durch die Verdichtung des Arbeitsfluids wird dieses erwärmt. Diese Wärme kann bereits direkt verwendet oder bereitgestellt werden, wodurch das Arbeitsfluid abkühlen würde. Durch das wenigstens teilweise Einleiten des verdichteten Arbeitsfluids in den zweiten Wärmespeicher, der beispielsweise bereits annähernd voll beladen ist, wird das eingeleitete Arbeitsfluid wieder oder weiter erwärmt beziehungsweise überhitzt. Es ist daher von Vorteil Wärme zu erzeugen, wenn der zweite Wärmespeicher annähernd voll beladen ist, wobei die Beladung mittels der beim Verdichten mittels des ersten Verdichters erzeugten Wärme erfolgt.

Das Arbeitsfluid wird erwärmt, da typischerweise der zweite Verdichter das Arbeitsfluid weniger hoch oder stark verdichtet als der erste Verdichter das Arbeitsfluid. Mit anderen Worten wird die mittels der Verdichtung mittels des ersten Verdichters erzeugte Wärme zur Erwärmung des mittels des zweiten Verdichters verdichten Arbeitsfluid verwenden. Das am ersten Ausgang des zweiten Wärmespeichers erwärmte Arbeitsfluid wird anschließend wenigstens teilweise zum Eingang des zweiten Expanders geführt, wobei hierdurch aus dem überhitzten Arbeitsfluid mittels des zweiten Expanders elektrische Energie erzeugt wird. Weiterhin kann über einen dritten Wärmetauscher Wärme bereitgestellt werden.

Es ist besonders bevorzugt mittels der erfindungsgemäßen Verfahren gleichzeitig wenigstens Wärme und Kälte zu erzeugen oder bereitzustellen.

Es ergeben sich zur erfindungsgemäßen Vorrichtung und/oder einer ihrer Ausgestaltungen gleichartige und gleichwertige Vorteile der erfindungsgemäßen Verfahren.

Gemäß einer vorteilhaften Ausgestaltung der Erfindung ist jede der thermischen Kopplungen mittels eines Dreiwegeventils ausgebildet.

Mit anderen Worten ist der Ausgang des ersten Verdichters mit dem ersten Eingang des ersten Wärmespeichers und dem zweiten Eingang des zweiten Wärmespeichers über ein Dreiwegeventil thermisch, insbesondere fluidisch, gekoppelt. Weiterhin sind der erste Ausgang des ersten Wärmespeichers und der zweite Ausgang des zweiten Wärmespeichers mit dem Eingang des ersten Expanders über ein Dreiwegeventil thermisch, insbesondere fluidisch, gekoppelt. Weiterhin ist der Ausgang des zweiten Verdichters mit dem ersten Eingang des zweiten Wärmespeichers und dem zweiten Eingang des ersten Wärmespeichers über ein Dreiwegeventil thermisch, insbesondere fluidisch, gekoppelt. Weiterhin sind der erste Ausgang des zweiten Wärmespeichers und der zweite Ausgang des ersten Wärmespeichers mit dem Eingang des zweiten Expanders über ein Dreiwegeventil thermisch, insbesondere fluidisch, gekoppelt.

In einer vorteilhaften Weiterbildung der Erfindung weist der erste Wärmespeicher einen ersten und zweiten Endbereich auf, wobei der erste Eingang des ersten Wärmespeichers und der zweite Ausgang des ersten Wärmespeichers innerhalb des ersten Endbereiches des ersten Wärmespeichers angeordnet sind, und der erste Ausgang des ersten Wärmespeichers und der zweite Eingang des ersten Wärmespeichers innerhalb des zweiten Endbereiches des ersten Wärmespeichers angeordnet sind.

Ist der erste Wärmespeicher horizontal ausgerichtet, so sind sein erster und zweiter Endbereich zueinander horizontal gegenüberliegend angeordnet. Ist der erste Wärmespeicher vertikal ausgerichtet, so sind sein erster und zweiter Endbereich zueinander vertikal gegenüberliegend angeordnet. Unabhängig von der Ausrichtung des ersten Wärmespeichers weisen sein erster und zweiter Endbereich einen Temperaturunterschied zueinander auf. Zwischen dem ersten und zweiten Endbereich des ersten Wärmespeichers ist typischerweise ein Zwischenbereich des ersten Wärmespeichers angeordnet, der die zwei Endbereich des ersten Wärmespeichers voneinander abgrenzt.

Gemäß einer vorteilhaften Ausgestaltung der Erfindung weist der zweite Wärmespeicher einen ersten und zweiten Endbereich auf, wobei der erste Eingang des zweiten Wärmespeichers und der zweite Ausgang des zweiten Wärmespeichers innerhalb des zweiten Endbereiches des zweiten Wärmespeichers angeordnet sind, und der erste Ausgang des zweiten Wärmespeichers und der zweite Eingang des zweiten Wärmespeichers innerhalb des ersten Endbereiches des zweiten Wärmespeichers angeordnet sind.

Ist der zweite Wärmespeicher horizontal ausgerichtet, so sind sein erster und zweiter Endbereich zueinander horizontal gegenüberliegend angeordnet. Ist der zweite Wärmespeicher vertikal ausgerichtet, so sind sein erster und zweiter Endbereich zueinander vertikal gegenüberliegend angeordnet. Unabhängig von der Ausrichtung des zweiten Wärmespeichers weisen sein erster und zweiter Endbereich einen Temperaturunterschied zueinander auf. Zwischen dem ersten und zweiten Endbereich des zweiten Wärmespeichers ist typischerweise ein Zwischenbereich des zweiten Wärmespeichers angeordnet, der die zwei Endbereich des zweiten Wärmespeichers voneinander abgrenzt.

In einer vorteilhaften Ausgestaltung der Erfindung weisen die ersten Endbereiche der Wärmespeicher jeweils eine höhere Temperatur als die zum jeweiligen Wärmespeicher zugehörigen zweiten Endbereich auf.

Mit anderen Worten ist der erste Endbereich des ersten Wärmetauschers wärmer als der zweite Endbereich des ersten Wärmetauschers und der erste Endbereich des zweiten Wärmespeichers ebenfalls wärmer als der zweite Endbereich des zweiten Wärmespeichers.

Gemäß einer vorteilhaften Ausgestaltung der Erfindung weist der erste Verdichter eine größere Verdichtung als der zweite Verdichter auf.

Dadurch wird vorteilhafterweise das Arbeitsfluid mittels des ersten Verdichters stärker erwärmt als mittels des zweiten Verdichters. Vorteilhafterweise kann dadurch die bei der Verdichtung des Arbeitsfluids mittels des ersten Verdichters erzeugte Wärme zur Erwärmung des mittels des zweiten Verdichters verdichteten Arbeitsfluids, über den zweiten Wärmespeicher, verwendet werden.

Bevorzugt weist hierbei der erste Verdichter eine Verdichtung im Bereich von 1 Megapascal bis 4 Megapascal, besonders bevorzugt im Bereich von 0,5 Megapascal bis 3 Megapascal, und der zweite Verdichter eine Verdichtung im Bereich von 0,1 Megapascal bis 1 Megapascal, besonders bevorzugt im Bereich von 0,1 Megapascal bis 0,5 Megapascal, auf.

Gemäß einer vorteilhaften Ausgestaltung der Erfindung umfasst die Vorrichtung einen ersten Wärmetauscher zur Bereitstellung der Kälte, wobei der erste Wärmetauscher nach dem ersten Expander angeordnet ist.

Dadurch kann vorteilhafterweise die mittels des ersten Expanders erzeugte Kälte für ihren Verbrauch bereitgestellt werden.

In einer vorteilhaften Weiterbildung der Erfindung umfasst die Vorrichtung einen zweiten Wärmetauscher und wenigstens einen Teil eines Fernwärmenetzes, wobei der zweite Wärmetauscher wenigstens mit dem Teil des Fernwärmenetzes thermisch gekoppelt ist.

Hierbei ist der zweite Wärmetauscher bevorzugt nach dem zweiten Verdichter und vor dem ersten Eingang des zweiten Wärmespeichers angeordnet.

Dadurch kann vorteilhafterweise die bei der Verdichtung des Arbeitsfluids mittels des zweiten Verdichters erzeugte Wärme bereitgestellt, abgeführt und/oder verwendet werden. Vorteilhafterweise kühlt das Arbeitsfluid, welches mittels des zweiten Verdichters verdichtet wurde dadurch ab. Das dadurch abgekühlte Arbeitsfluid kann dann zum ersten Eingang des zweiten Wärmespeichers und/oder zum zweiten Eingang des ersten Wärmespeichers geführt werden.

Gemäß einer vorteilhaften Ausgestaltung der Erfindung umfasst die Vorrichtung einen dritten Wärmetauscher zur Bereitstellung von Wärme, wobei der dritte Wärmetauscher nach dem zweiten Expander angeordnet ist.

Dadurch wird vorteilhafterweise Wärme bereitgestellt.

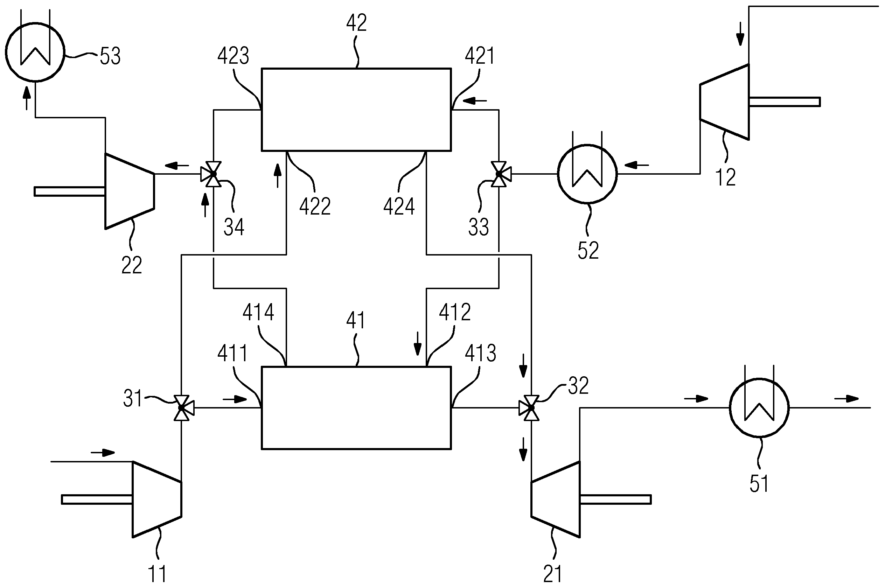

Weitere Vorteile, Merkmale und Einzelheiten der Erfindung ergeben sich aus dem im Folgenden beschriebenen Ausführungsbeispielen sowie anhand der Zeichnung. Dabei zeigt die einzige Figur einen schematisierten Aufbau einer Vorrichtung gemäß einer Ausgestaltung der vorliegenden Erfindung.

Gleichartige, gleichwertige oder gleichwirkende Elemente können in der Figur mit demselben Bezugszeichen versehen sein.

Die Figur zeigt eine schematische Darstellung einer Vorrichtung 1 gemäß einer Ausgestaltung der vorliegenden Erfindung.

Die Vorrichtung 1 umfasst einen ersten Verdichter 11 und einen zweiten Verdichter 12, die dazu ausgestaltet und vorgesehen sind, ein Arbeitsfluid zu verdichten. Hierbei weist der erste Verdichter 11 eine größere Verdichtung als der zweite Verdichter 12 auf. Weiterhin umfasst die Vorrichtung 1 einen ersten Expander 21 und einen zweiten Expander 22, die zum Expandieren des Arbeitsfluids ausgebildet und vorgesehen sind. Die Vorrichtung 1 umfasst weiterhin einen ersten Wärmespeicher 41 und einen zweiten Wärmespeicher 42. Ferner weist die Vorrichtung 1 einen ersten Wärmetauscher 51, einen zweiten Wärmetauscher 52 und einen dritten Wärmetauscher 53 auf.

Der erste Wärmespeicher 41 und der zweite Wärmespeicher 42 weisen jeweils einen ersten und zweiten Endbereich auf, wobei typischerweise der jeweilige erste Endbereich eine höhere Temperatur als der jeweilige zweite Endbereich aufweist. Mit anderen Worten ist der erste Endbereich ein warmer Bereich des jeweiligen Wärmespeichers 41, 42 und der zweite Endbereich ein kalter Bereich des jeweiligen Wärmespeichers 41, 42. Der Temperaturgradient innerhalb des jeweiligen Wärmespeichers 41, 42 verläuft daher von seinem ersten Endbereich (warm) zu seinem zweiten Endbereich (kalt).

Für die Beschreibung der Funktionsweise der Vorrichtung 1 ist es zweckdienlich diese gedanklich zunächst in einen ersten und zweiten Pfad bezüglich des Flusses des Arbeitsfluids einzuteilen.

Innerhalb des ersten Pfades wird das Arbeitsfluid mittels des ersten Verdichters 11 verdichtet, beispielsweise auf einen Druck von 30 Bar, wobei bei Verwendung von Luft als Arbeitsfluid dieses dann eine Temperatur von etwa 540 Grad Celsius aufweist. Hierzu sind etwa 540 Kilojoule pro Kilogramm elektrische Energie erforderlich. Das mittels des ersten Verdichters 11 verdichtete Arbeitsfluid wird über ein erstes Dreiwegeventil 31 zu einem ersten Eingang 411 des ersten Wärmespeichers 41 oder zu einem zweiten Eingang 422 des zweiten Wärmespeichers 42 geführt. Mittels des ersten Dreiwegeventils 31 ist somit einstellbar, ob das mittels des ersten Verdichters 11 verdichtete Arbeitsfluid zum ersten Eingang 411 des ersten Wärmespeichers 41 oder zum zweiten Eingang 422 des zweiten Wärmespeichers 42 geleitet wird. Hierbei kann das Arbeitsfluid teilweise oder vollständig auf die genannten Eingänge 411, 422 bezüglich seines Massenstromes aufgeteilt werden. Innerhalb des ersten Pfades wird das Arbeitsfluid vollständig dem ersten Eingang 411 des ersten Wärmespeichers 41 zugeführt. Innerhalb des Wärmespeichers 41 beziehungsweise in thermischer Kopplung mit dem ersten Wärmespeicher 41 kühlt das Arbeitsfluid aufgrund eines Wärmeübertrages von dem Arbeitsfluid auf den ersten Wärmespeicher 41, beziehungsweise auf ein Speichermedium des ersten Wärmespeichers 41, ab. Das dadurch abgekühlte Arbeitsfluid wird mittels eines ersten Ausgangs 413 des ersten Wärmespeichers 41 über ein zweites Dreiwegeventil 32 einem Eingang des ersten Expanders 21 zugeführt und expandiert. Durch die Expansion kühlt das Arbeitsfluid weiter ab, wobei das Arbeitsfluid typischerweise auf einen Druck von etwa 1 Bar expandiert wird. Somit kann das Arbeitsfluid eine Temperatur im Bereich von -50 Grad Celsius bis -20 Grad Celsius aufweisen. Mit anderen Worten wird dadurch Kälte erzeugt. Zur Erzeugung der Kälte kann das Abführen von weiterer Wärme vorgesehen sein.

Die erzeugte Kälte kann anschließend mittels des ersten Wärmetauschers 51 für einen externen Kälteverbraucher bereitgestellt werden. Somit wird innerhalb des beschriebenen ersten Pfades Kälte bereitgestellt oder erzeugt.

Innerhalb des zweiten Pfades wird ein Arbeitsfluid mittels des zweiten Verdichters 12 verdichtet. Hierbei ist die Verdichtung mittels des zweiten Verdichters 12 geringer als die Verdichtung mittels des ersten Verdichters 11. Beispielsweise wird das Arbeitsfluid auf einen Druck von 5 Bar und somit bei Luft als Arbeitsfluid auf eine Temperatur von etwa 200 Grad Celsius erwärmt. Hierzu sind etwa 175 Kilojoule pro Kilogramm elektrische Energie erforderlich. Das mittels des zweiten Verdichters 12 verdichtete und erwärmte Arbeitsfluid wird dem zweiten Wärmetauscher 52 zugeführt, sodass die bei der Verdichtung entstandene Wärme mittels des zweiten Wärmetauschers 52, der insbesondere mit einem Fernwärmenetz gekoppelt ist, bereitstellbar ist. Anschließend wird das Arbeitsfluid mittels eines dritten Dreiwegeventils 33 zu einem ersten Eingang 421 des zweiten Wärmespeichers 42 oder einem zweiten Eingang 412 des ersten Wärmespeichers geführt. Mittels des dritten Dreiwegeventils 33 ist somit einstellbar, ob das mittels des zweiten Verdichters 12 verdichtete Arbeitsfluid zum ersten Eingang 421 des zweiten Wärmespeichers 42 oder zum zweiten Eingang 412 des ersten Wärmespeichers 41 geleitet wird. Hierbei kann das Arbeitsfluid teilweise oder vollständig auf die genannten Eingänge 421, 412 bezüglich seines Massenstromes aufgeteilt werden. Innerhalb des ersten Pfades wird das Arbeitsfluid vollständig dem ersten Eingang 421 des zweiten Wärmespeichers 42 zugeführt.

Der zweite Wärmespeicher 42 ist bevorzugt bereits annähernd vollständig beladen. Dadurch wird das in den zweiten Wärmespeicher 42 eingeleitete und mit einem Speichermedium des zweiten Wärmespeichers im thermischen Kontakt stehende Arbeitsfluid erwärmt, wobei das erwärmte Arbeitsfluid über einen ersten Ausgang 423 des zweiten Wärmespeichers 42 einem Eingang des zweiten Expanders 22 zugeführt wird. Am ersten Ausgang 423 des zweiten Wärmespeichers 42 weist das Arbeitsfluid beispielsweise eine Temperatur von etwa 540 Grad Celsius auf. Die Führung oder Einleitung des Arbeitsfluids zum Eingang des zweiten Expanders 22 erfolgt über ein viertes Dreiwegeventil 34.

Nach dem zweiten Expander 22 weist das Arbeitsfluid typischerweise einen Druck von etwa 1 Bar und eine Temperatur von etwa 245 Grad Celsius auf. Diese Wärme kann mittels eines dritten Wärmetauschers 53 bereitgestellt werden. Beispielsweise werden hierbei 100 Kilojoule pro Kilogramm Wärme erzeugt und bereitgestellt.

Der erste und zweite Pfad sind erfindungsgemäß miteinander über die ersten und zweiten Wärmespeicher 41, 42 gekoppelt. Hierbei wird die thermische Kopplung mittels der Dreiwegeventile 31, 32, 33, 34 ausgebildet. Mit anderen Worten kann das mittels des ersten Verdichters 11 verdichtete Arbeitsfluid zum ersten Eingang 411 des ersten Wärmespeichers 41 oder zum zweiten Eingang 422 des zweiten Wärmespeichers 42 geführt werden. Das mittels des zweiten Verdichters 12 verdichtete Arbeitsfluid kann mittels des dritten Dreiwegeventils 33 zum ersten Eingang 421 des zweiten Wärmespeichers 42 oder zum zweiten Eingang 412 des ersten Wärmespeichers 41 geführt werden.

Dem Eingang des ersten Expanders 21 kann mittels des zweiten Dreiwegeventils 32 Arbeitsfluid aus dem ersten Ausgang 413 des ersten Wärmespeichers 41 oder aus dem zweiten Ausgang 424 des zweiten Wärmespeichers 42 zugeführt werden.

Dem Eingang des zweiten Expanders 22 kann mittels des vierten Dreiwegeventils 34 Arbeitsfluid aus dem ersten Ausgang 423 des zweiten Wärmespeichers 42 oder aus dem zweiten Ausgang 414 des ersten Wärmespeichers 41 zugeführt werden.

Dadurch ergibt sich insgesamt eine vorteilhafte und synergetisch thermische Kopplung, mittels welcher Wärme und Kälte sowie elektrische Energie gleichzeitig oder getrennt voneinander effizient erzeugbar ist. Mit anderen Worten geht die bei der Verdichtung des Arbeitsfluid mittels des Verdichters 11 und mittels des zweiten Verdichters 12 erzeugte Wärme nicht verloren, sondern wird entweder zur Erzeugung von Wärme, zur Erzeugung elektrischer Energie und/oder zur Erzeugung von Kälte verwendet. Die Entkopplung und Verwendung der verschiedenen Energieformen wird mittels der synergetisch kombinierten und gekoppelten Wärmespeicher 41, 42 ermöglicht.

Beispielsweise wird der zweite Wärmespeicher 42 mittels der bei der Erzeugung mittels des ersten Verdichters 11 erzeugten Wärme beladen, falls der erste Wärmespeicher 41 bereits vollständig beladen ist. Dadurch wird vorteilhafterweise die bei der Verdichtung des Arbeitsfluids mittels des ersten Verdichters 11 erzeugte Wärme für die Bereitstellung von Kälte über den ersten Wärmetauscher 51 und/oder für die Bereitstellung von Wärme über den dritten Wärmetauscher 53 verwendet.

Durch die Kombination der dargestellten und beschrieben zwei Pfade, die durch die synergetische und erfindungsgemäße Verschaltung der zwei Wärmespeicher 41, 42 gegeben ist, weist die Vorrichtung 1 bei einer gleichzeitigen Erzeugung von Wärme und Kälte in Bezug auf die eingesetzte elektrischen Energie einen Wirkungsgrad von über 85 Prozent auf. Dadurch wird vorteilhafterweise effizient Wärme und Kälte bereitgestellt.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Vorrichtung
- 11: erster Verdichter
- 12: zweiter Verdichter
- 21: erster Expander
- 22: zweiter Expander
- 41: erster Wärmespeicher
- 42: zweiter Wärmespeicher
- 51: erster Wärmetauscher
- 52: zweiter Wärmetauscher
- 53: dritter Wärmetauscher
- 411: erster Eingang erster Wärmespeicher
- 412: zweiter Eingang erster Wärmespeicher
- 413: erster Ausgang erster Wärmespeicher
- 414: zweiter Ausgang erster Wärmespeicher
- 421: erster Eingang zweiter Wärmespeicher
- 422: zweiter Eingang zweiter Wärmespeicher
- 423: erster Ausgang zweiter Wärmespeicher
- 424: zweiter Ausgang zweiter Wärmespeicher

## Patentansprüche

1. Vorrichtung (1) zur Bereitstellung von Wärme, Kälte und/oder elektrischer Energie, umfassend:
- einen ersten und zweiten Verdichter (11, 12) zum Verdichten eines Arbeitsfluids;
- einen ersten und zweiten Expander (21, 22) zum Expandieren des Arbeitsfluids; und
- einen ersten und zweiten Wärmespeicher (41, 42);
**dadurch gekennzeichnet, dass**
- ein Ausgang des ersten Verdichters (11) mit einem ersten Eingang (411) des ersten Wärmespeichers (41) und einem zweiten Eingang (422) des zweiten Wärmespeichers (42) thermisch gekoppelt ist;
- ein Ausgang des zweiten Verdichters (12) mit einem ersten Eingang (421) des zweiten Wärmespeichers (42) und einem zweiten Eingang (412) des ersten Wärmespeichers (41) thermisch gekoppelt ist;
- ein Eingang des ersten Expanders (21) mit einem ersten Ausgang (413) des ersten Wärmespeichers (41) und einem zweiten Ausgang (424) des zweiten Wärmespeichers (41) thermisch gekoppelt ist; und
- ein Eingang des zweiten Expanders (22) mit einem ersten Ausgang (423) des zweiten Wärmespeichers (42) und einem zweiten Ausgang (414) des ersten Wärmespeichers(41) thermisch gekoppelt ist.

2. Vorrichtung (1) gemäß Anspruch 1, **dadurch gekennzeichnet, dass** jede der thermischen Kopplung mittels eines Dreiwegeventils (31) ausgebildet ist.

3. Vorrichtung (1) gemäß Anspruch 1 oder 2, **dadurch gekennzeichnet, dass** der erste Wärmespeicher (41) einen ersten und zweiten Endbereich aufweist, wobei der erste Eingang (411) des ersten Wärmespeichers (41) und der zweite Ausgang (414) des ersten Wärmespeichers (41) innerhalb des ersten Endbereiches des ersten Wärmespeichers (41) angeordnet sind, und der erste Ausgang (413) des ersten Wärmespeichers (41) und der zweite Eingang (412) des ersten Wärmespeichers (41) innerhalb des zweiten Endbereiches des ersten Wärmespeichers (41) angeordnet sind.

4. Vorrichtung (1) gemäß einem der vorhergehenden Ansprüche, **dadurch gekennzeichnet, dass** der zweite Wärmespeicher (42) einen ersten und zweiten Endbereich aufweist, wobei der erste Eingang (421) des zweiten Wärmespeichers (42) und der zweite Ausgang (424) des zweiten Wärmespeichers (42) innerhalb des zweiten Endbereiches des zweiten Wärmespeichers (42) angeordnet sind, und der erste Ausgang (423) des zweiten Wärmespeichers (42) und der zweite Eingang (422) des zweiten Wärmespeichers (42) innerhalb des ersten Endbereiches des zweiten Wärmespeichers (42) angeordnet sind.

5. Vorrichtung (1) gemäß Anspruch 3 oder 4, **dadurch gekennzeichnet, dass** die ersten Endbereiche der Wärmespeicher (41, 42) jeweils eine höhere Temperatur als die zum jeweiligen Wärmespeicher (41, 42) zugehörigen zweiten Endbereiche aufweisen.

6. Vorrichtung (1) gemäß einem der vorhergehenden Ansprüche, **dadurch gekennzeichnet, dass** der erste Verdichter (11) eine größerer Verdichtung als der zweite Verdichter (12) aufweist.

7. Vorrichtung (1) gemäß Anspruch 6, **dadurch gekennzeichnet, dass** der erste Verdichter (11) eine Verdichtung im Bereich von 1 Megapascal bis 4 Megapascal, bevorzugt im Bereich von 0,5 Megapascal bis 3 Megapascal, und der zweite Verdichter (12) eine Verdichtung im Bereich von 0,1 Megapascal bis 1 Megapascal, bevorzugt im Bereich von 0,1 Megapascal bis 0,5 Megapascal, aufweist.

8. Vorrichtung (1) gemäß einem der vorhergehenden Ansprüche, **dadurch gekennzeichnet, dass** die Vorrichtung (1) einen ersten Wärmetauscher (41) zur Bereitstellung der Kälte umfasst, wobei der erste Wärmetauscher (41) nach dem ersten Expander (21) angeordnet ist.

9. Vorrichtung (1) gemäß einem der vorhergehenden Ansprüche, **dadurch gekennzeichnet, dass** die Vorrichtung (1) einen zweiten Wärmetauscher (52) und wenigstens einen Teil eines Fernwärmenetzes umfasst, wobei der zweite Wärmetauscher (52) wenigstens mit dem Teil des Fernwärmenetzes thermisch gekoppelt ist.

10. Vorrichtung (1) gemäß Anspruch 9, **dadurch gekennzeichnet, dass** der zweite Wärmetauscher (52) nach dem zweiten Verdichter (12) und vor dem ersten Eingang (421) des zweiten Wärmespeichers (42) angeordnet ist.

11. Vorrichtung (1) gemäß einem der vorhergehenden Ansprüche, **dadurch gekennzeichnet, dass** die Vorrichtung (1) einen dritten Wärmetauscher (53) zur Bereitstellung von Wärme umfasst, wobei der dritte Wärmetauscher (53) nach dem zweiten Expander angeordnet ist.

12. Verfahren zum Betrieb einer Vorrichtung gemäß einem der Ansprüche 1 bis 11 zur Bereitstellung wenigstens einer Kälte, umfassend die Schritte:
- Verdichten des Arbeitsfluids mittels des ersten Verdichters (11) ;
- Wenigstens teilweises Einleiten des verdichteten Arbeitsfluids in den ersten Wärmespeicher (41) mittels des ersten Eingangs (411) des ersten Wärmespeichers (41);
- Wenigstens teilweises Einleiten des verdichteten und durch eine Wärmeübertragung von dem Arbeitsfluid auf den ersten Wärmespeicher (41) abgekühlten Arbeitsfluids in den Eingang des ersten Expanders (21) mittels des ersten Ausgangs (413) des ersten Wärmespeichers (41); und
- Expandieren des in den ersten Expander (21) eingeleiteten Arbeitsfluids mittels des ersten Expanders (21).

13. Verfahren gemäß Anspruch 12, umfassend den weiteren Schritt:
- Wenigstens teilweises Einleiten des mittels des ersten Verdichters (11) verdichteten Arbeitsfluids in den zweiten Wärmespeicher (42) mittels des zweiten Eingangs (422) des zweiten Wärmespeichers (42).

14. Verfahren zum Betrieb einer Vorrichtung gemäß einem der Ansprüche 1 bis 11 zur Bereitstellung wenigstens einer Wärme, umfassend die Schritte:
- Verdichten des Arbeitsfluids mittels des zweiten Verdichters (12);
- Wenigstens teilweises Einleiten des verdichteten Arbeitsfluids in den zweiten Wärmespeicher (42) mittels des ersten Eingangs (421) des zweiten Wärmespeichers (42);
- Wenigstens teilweises Einleiten des verdichteten und durch eine Wärmeübertragung von dem zweiten Wärmespeicher (42) auf das Arbeitsfluid erwärmten Arbeitsfluids in den Eingang des zweiten Expanders (21) mittels des ersten Ausgangs (423) des zweiten Wärmespeichers (42); und
- Expandieren des in den zweiten Expander (22) eingeleiteten Arbeitsfluids mittels des zweiten Expanders (22).

15. Verfahren gemäß Anspruch 14, umfassend den weiteren Schritt:
- Wenigstens teilweises Einleiten des mittels des zweiten Verdichters (12) verdichteten Arbeitsfluids in den ersten Wärmespeicher (41) mittels des zweiten Eingangs (412) des ersten Wärmespeichers (41).
